# EUROPÄISCHE PATENTANMELDUNG

(11) **EP 4 729 645 A1**
(43) Veröffentlichungstag der Anmeldung: **22.04.2026**
(21) Anmeldenummer: 25207575.9
(22) Anmeldetag: 08.10.2025
(51) Int. Cl.: C22C 21/02, C22C 21/04, C22F 1/043

(54) **ALUMINIUMLEGIERUNG FÜR STRUKTURGUSSANWENDUNGEN, VERWENDUNG DER ALUMINIUMLEGIERUNG ZUM DRUCKGIESSEN VON STRUKTURBAUTEILEN, STRUKTURBAUTEIL FÜR EIN KRAFTFAHRZEUG UND KRAFTFAHRZEUG MIT DEM STRUKTURBAUTEIL**

(30) Priorität: 15.10.2024 DE 102024129876
(71) Anmelder: AUDI Aktiengesellschaft, 85057 Ingolstadt (DE); Volkswagen Aktiengesellschaft, 38440 Wolfsburg (DE)
(72) Erfinder: Kohlhepp, Marius, 74321 Bietigheim-Bissingen (DE); Hummel, Marc, 74363 Güglingen (DE); Schwering, Christian, 49744 Groß Hesepe/Geeste (DE)
(74) Vertreter: Hofstetter, Schurack & Partner

(57) **Zusammenfassung**

Es ist eine Aluminiumlegierung für Strukturgussanwendungen mit erhöhter Duktilität mit 7,5 bis 11,5 Gew.-% Silizium, max. 0,24 Gew.-% Mangan, 0,08 bis 0,5 Gew.-% Chrom, 0,04 bis 0,095 Gew.-% Magnesium, insbesondere 0,06 bis 0,095 Gew.-% Magnesium, 0,08 bis 0,5 Gew.-% Eisen, insbesondere 0,08 bis 0,25 Gew.-% Eisen, 0,01 bis 0,5 Gew.-% Kupfer, insbesondere 0,01 bis 0,2 Gew.-% Kupfer, max. 0,35 Gew.-% Zink, 0,004 bis 0,15 Gew.-% Titan, sowie als Rest Aluminium und unvermeidbaren Verunreinigungen bereitgestellt.

## Beschreibung

Die Erfindung betrifft eine Aluminiumlegierung für Strukturgussanwendungen mit erhöhter Duktilität, eine Verwendung der Aluminiumlegierung zum Druckgießen von Strukturbauteilen, ein Strukturbauteil für ein Kraftfahrzeug aus der Aluminiumlegierung und ein Kraftfahrzeug mit dem Strukturbauteil.

Für hochbeanspruchte Druckgusskomponenten in Fahrzeugstrukturen werden vorrangig lösungsgeglühte Legierungen eingesetzt. Dies liegt darin begründet, dass bei der Lösungsglühung das Gefüge vorteilig verändert wird und hierdurch neben einer hohen Festigkeit auch eine hohe Duktilität erzielt werden kann, welche für eine Bauteilperformance und für Fügevorgänge vorteilhaft sind.

Beispielsweise beschreibt Druckschrift EP 1 443 122 A1 eine zum Druckgießen von Bauteilen mit hoher Dehnung im Gusszustand geeignete Aluminiumlegierung mit 8,5 bis 10,5 Gew.-% Silizium, 0,3 bis 0,8 Gew.-% Mangan, max. 0.06 Gew.-% Magnesium, max. 0,15 Gew.-% Eisen, max. 0,03 Gew.-% Kupfer, max. 0,10 Gew.-% Zink, max. 0,15 Gew.-% Titan, 0,05 bis 0.5 Gew.-% Molybdän und 30 bis 300 ppm Strontium oder 5 bis 30 ppm Natrium und/oder 1 bis 30 ppm Calcium zur Dauerveredelung. Wahlweise enthält die Legierung noch 0,05 bis 0.3 Gew.-% Zirkonium, Galliumphosphid und/oder Indiumphosphid in einer Menge entsprechend 1 bis 250 ppm Phosphor zur Kornfeinung, Titan und Bor, zugegeben über eine Aluminium-Vorlegierung mit 1 bis 2 Gew.-% Ti und 1 bis 2 Gew.-% B, zur Kornfeinung und als Rest Aluminium und unvermeidbaren Verunreinigungen.

Zudem beschreibt die Druckschrift EP 3 825 428 A1 ein Verfahren zur Herstellung eines Druckgussbauteils und ein damit hergestelltes Druckgussbauteil, wobei eine hervorragende Stanznieteignung erreicht wird, wenn das Druckgussbauteil eine aushärtbare Aluminiumlegierung mit folgenden Legierungsbestandteilen aufweist: von 5,0 bis 9,0 Gew.-% Silizium, von 0,25 bis 0,5 Gew.-% Magnesium und als Rest Aluminium sowie herstellungsbedingt unvermeidbare Verunreinigungen mit jeweils maximal 0,05 Gew.-% und gesamt höchstens 0,15 Gew.-%, wobei das Druckgussbauteil eine Streckgrenze (Rp0,2) von größer 190 MPa und eine Bruchdehnung (A5) von größer gleich 7 % aufweist und Gleichmaßdehnung (Ag) und Einschnürdehnung (Az) die Bedingung Az ≥ Ag/2 erfüllt.

Ferner beschreibt die Druckschrift EP 3 775 309 B1 (WO 2020 / 207 708 A1) eine Aluminium-Druckgusslegierung mit folgenden Legierungsbestandteilen: 7,5 bis 11,5 Gew.-% Silizium, 0,25 bis 0,6 Gew.-% Mangan, 0,03 bis 0,06 Gew.-% Chrom, 0,001 bis 0,048 Gew.-%, insbesondere 0,001 bis 0,043 Gew -%, insbesondere 0,024 bis 0,043 Gew.-% Molybdän, 0,001 bis 0,08 Gew.-% Magnesium, optional 0,001 bis 0,15 Gew.-% Eisen, optional 0,004 bis 0,15 Gew.-% Titan, optional 0,01 bis 0,2 Gew.-% Zirkonium, optional 0,008 bis 0,02 Gew.-% Strontium, optional 0,001 bis 0,1 Gew.-% Vanadium, sowie als Rest Aluminium und unvermeidbare Verunreinigungen.

Ferner werden vorteilhafterweise naturharte Legierungen des Typs AlSi9Mn eingesetzt, die aufgrund der sehr geringen Anteile (Gehalte) an Magnesium nicht aushärten und somit keine nachfolgende Wärmebehandlung und damit auch keine Lösungsglühung benötigen. Somit sind Bauteile aus solchen Legierungen aufgrund der nicht notwendigen Wärmebehandlung kostengünstig zu produzieren und diese Legierungen ermöglichen auch die Fertigung von sehr großen Gigacasting-Bauteilen. Dieser Trend ermöglicht es, mit möglichst kleinen Karosseriebauflächen und Anlageninvestitionen Fahrzeugkarosserien zu erzeugen.

Ferner ist die Verwendung von Sekundäraluminium eine Möglichkeit, Kosten zu reduzieren, einen Energieeinsatz und damit einen CO₂-Ausstoß (CO₂-Fußabdruck) bei einer Fertigung eines Kraftfahrzeug zu verringern und eine Nachhaltigkeit des verwendeten Aluminiums zu verbessern. Im Hinblick auf die Nachhaltigkeit und den Klimaschutz ist es somit vorteilhaft, Aluminium-Sekundärlegierungen zu verwenden. Denn im Vergleich zur Primäraluminiumlegierung kann eine Kohlendioxideinsparung im Bereich von etwa 5 Tonnen bis 17 Tonnen CO₂-Äquivalent pro Tonne Aluminiumlegierung erreicht werden, wenn anstelle der Primäraluminiumlegierung eine recycelte Sekundärlegierung zur Herstellung eines Bauteils verwendet wird. Jedoch besteht bei einer Verwendung von Sekundäraluminium das Problem, dass unerwünschte Verunreinigungsmetalle wie Eisen oder Kupfer Materialeigenschaften der Legierung verschlechtern.

Es ist somit eine Aufgabe der Erfindung, eine naturharte Aluminiumgusslegierung bereitzustellen, die nach dem Gießen keine nachfolgende Wärmebehandlung benötigt, gute mechanische Eigenschaften aufweist und zugleich eine Kostenreduzierung ermöglicht und den CO₂-Fußabdruck verringert.

Erfindungsgemäß wird diese Aufgabe durch eine Aluminiumlegierung für Strukturgussanwendungen mit erhöhter Duktilität mit den in Anspruch 1 genannten Merkmalen gelöst. Ferner wird die Aufgabe durch die Verwendung der Aluminiumlegierung zum Druckgießen von Strukturbauteilen, durch ein Strukturbauteil für ein Kraftfahrzeug aus der Aluminiumlegierung und ein Kraftfahrzeug mit dem Strukturbauteil gemäß den weiteren unabhängigen Ansprüchen gelöst. Vorteilhafte Weiterbildungen der Erfindung sind in den Unteransprüchen angegeben.

Die Erfindung basiert auf der Grundidee, eine Aluminiumlegierung zu schaffen, die einen Einsatz von hohen Anteilen von Sekundäraluminium ermöglicht, ohne dass sich ihre mechanischen Eigenschaften verschlechtern.

Gemäß einem ersten Aspekt stellt die Offenbarung eine Aluminiumlegierung für Strukturgussanwendungen mit erhöhter Duktilität bereit, die 7,5 bis 11,5 Gew.-% Silizium, max. 0,24 Gew.-% Mangan, 0,08 bis 0,5 Gew.-% Chrom, 0,04 bis 0,095 Gew.-% Magnesium, insbesondere 0,06 bis 0,095 Gew.-%, Magnesium, 0,08 bis 0,5 Gew.-% Eisen, insbesondere 0,08 bis 0,25 Gew.-% Eisen, 0,01 bis 0,5 Gew.-% Kupfer, insbesondere 0,01 bis 0,2 Gew.-% Kupfer, max. 0,35 Gew.-% Zink und 0,004 bis 0,15 Gew.-% Titan, sowie als Rest Aluminium und unvermeidbare Verunreinigungen umfasst.

Es ist zu beachten, dass bei der Verwendung von Aluminium-Druckgussbauteilen ein Zielkonflikt vorliegt. Bei Aluminium-Druckgussbauteilen sind siliziumhaltige Legierungen aufgrund ihrer Gießeigenschaften von Vorteil. Diese sind im Bereich der Anwendung ohne eine Wärmebehandlung durch den fehlenden Lösungsglühvorgang im direkten Vergleich mit lösungsgeglühten Legierungen relativ spröde, da eutektisches Silizium vernetzt vorliegt, die Verformungsfähigkeit beschränkt und die Rissanfälligkeit von spröden Phasen begünstigt.

Mit lösungsgeglühten Legierungen können hierbei im Allgemeinen bessere mechanische Kennwerte erzielt werden, jedoch werden kostspielige Folgeprozesse in Form von Wärmebehandlungen benötigt. Aufgrund dieser Wärmebehandlungen ist eine Größe von möglichen Bauteilen stark eingeschränkt oder nur unter großen Kosten und großem Aufwand möglich, der durch einen hohen Platzbedarf, einen hohen Energieaufwand, sowie lange Aufwärm- und Abkühlzeiten bedingt ist.

Naturharte Legierungen weisen diese Einschränkung nicht auf und benötigen keine aufwendigen Folgeprozesse, weshalb eine Fertigung von Karosseriebauteilen bei Verwendung von naturharten Legierungen kostengünstiger ist. Dafür sind sie jedoch vergleichsweise spröde.

Naturhart bedeutet hierbei, dass eine gewünschte Festigkeitssteigerung nur durch eine Mischkristallverfestigung sowie eine Kaltverfestigung erzielt wird und keine Ausscheidungshärtung auftritt. Naturharte Legierungen werden somit auch als nicht aushärtbar bezeichnet. Im Unterschied dazu wird bei aushärtbaren Legierungen eine Festigkeitssteigerung durch eine Ausscheidungshärtung (spezielle Wärmebehandlung) erreicht. Einige siliziumhaltige Aluminiumlegierungen (AISi-Legierungen) können beispielsweise naturharte Legierungen sein.

Die steigende Bauteilgröße bedarf einer naturharten Legierung ohne Wärmebehandlung, da Toleranzvorgaben an eine Karosserie leichter erfüllt und hohe Prozesskosten vermieden werden können.

Durch eine geschickte Auswahl der Legierungselemente ist es möglich, eine naturharte Legierung zu erzeugen, welche sowohl gießbar ist, als auch gute mechanische Eigenschaften und Dehnungswerte besitzt, obwohl es sich um eine naturharte ungeglühte Legierung handelt.

Hierbei gewährleistet der Siliziumanteil im Bereich von 7,5 bis 11,5 Gew.-% (Gewichtsprozent) eine gute Balance aus Duktilität und Gießbarkeit für unterschiedlichste Bauteilgrößen. Silizium dehnt sich beim Erstarren aus und kann somit einen Schwund bei einem Erstarren eines gegossenen Bauteils ausgleichen. Zudem setzt Silizium beim Erstarren in Vergleich zu anderen Elementen eine sehr große Menge an Energie frei, so dass ein hoher Siliziumanteil eine gute Fließbarkeit und damit eine gute Gießbarkeit der Legierung gewährleistet. Wählt man einen Siliziumanteil von weniger als 7,5 Gew.-%, so kann keine gute Fließbarkeit mehr erreicht werden, sodass ein Siliziumanteil von weniger als 7,5 Gew.-% nicht bevorzugt ist. Andererseits neigt Aluminium mit einem Siliziumanteil von mehr als 11,5 Gew.-% dazu, spröde zu werden, sodass ein Siliziumanteil von mehr als 11,5 Gew.-% nicht bevorzugt ist.

Bei im Stand der Technik bekannten Legierungen wird teilweise Mangan zugesetzt, um eine Klebeneigung an einer Druckgießform zu reduzieren und damit eine Entformbarkeit der fertigen Gussteile zu verbessern. Dabei beträgt der Mangangehalt typischerweise zwischen 0,3 und 0,8 Gew.-%. Bei einem Mangangehalt von weniger als 0,3 Gew.-% kommt es gewöhnlich zu einer erhöhten Klebeneigung und ein komplexes Gussteil kann nicht mehr aus der Gießform entformt werden.

Bei der offenbarten Legierung ermöglichen es der im Druckguss im Vergleich zum Stand der Technik sehr niedrige Mangangehalt von unter 0,24 Gew.-% und die Verwendung von Chrom jedoch eine problemlose Entformbarkeit. Dies ermöglicht es, eine weitgehend fehlerfreie Produktion zu gewährleisten und dennoch deutlich bessere mechanische Eigenschaften zu erzielen als bei im Stand der Technik gängigen naturharten Legierungen mit erhöhtem Mangangehalt. Die offenbarte Legierung weist trotz des ungeglühten Gefüges eine überraschend hohe Bruchdehnung auf. Legierungen mit mehr als 0,24 Gew.-% neigen Mangan dazu, grobe intermetallische Ausscheidungen zu bilden, die zu einer Versprödung des Werkstoffs und damit zu einer Verringerung der Duktilität bzw. der Verformbarkeit führen können.

Die Obergrenze von 0,095 Gew.-% für Magnesium ermöglicht es, hohe Sekundäraluminiumanteile zu verwenden, wobei der naturharte Charakter der vorliegend offenbarten Legierung gewahrt werden kann. Erhöht man den Magnesiumanteil weiter auf mehr als 0,095 Gew.-%, kann ein Aushärten mit der Zeit stattfinden und es entsteht hierdurch ein nicht bevorzugter instabiler Festigkeitszustand. Unter 0,04 Gew.-% hingegen fehlt der härtende Effekt der Mischkristallverfestigung, wodurch die Festigkeit der Legierung niedriger ausfallen kann. Nur in dem genannten Bereich von 0,04 bis 0,095 Gew.-% Magnesium, insbesondere 0,06 bis 0,095 Gew.-% Magnesium, ist der Effekt der Mischkristallverfestigung in hohem Maße feststellbar, eine Aushärtung kann verhindert werden und es kann ein thermisch stabiler Zustand erzeugt werden.

Ferner ist es vorteilhaft, wenn nach einem Lackiervorgang, der eine Wärmebehandlung umfasst, die Dehngrenze nicht über 160 MPa beträgt und/oder ein Anstieg der Dehngrenze nicht mehr als 30 MPa beträgt (die Dehngrenze nicht um mehr als 30 MPa ansteigt), da ein solcher Anstieg auf eine thermische Instabilität hindeutet. Beispielsweise können in einem solchen Lackiervorgang 80 bis 250 °C für 10 bis 120 min herrschen, insbesondere 150 bis 250 °C für 25 bis 120 min.

Mit anderen Worten, bei einer Wärmebehandlung, die einen Lackiervorgang simuliert, beziehungsweise bei einer Wärmebehandlung, die einen Temperaturstress während einer Lebensdauer eines Bauteils simuliert (beispielsweise kann dies durch eine Wärmebehandlung mit einer Temperaturbeaufschlagung von 150 °C für 1000 h simuliert werden), soll die Dehngrenze nicht über 160 MPa und/oder nicht um mehr als 30 MPa ansteigen, da dies ansonsten auf eine thermische Instabilität hindeutet. Zudem können zu geringe Werte der Dehngrenze zu Problemen bei einer Dauerfestigkeit führen.

Die Anteile für Eisen, Kupfer, Zink und Titan in der vorliegend offenbarten Legierung ermöglichen es, dass die vorliegend offenbarte Legierung aus einer Mischung von Primäraluminium und Sekundäraluminium beziehungsweise einer sogenannten sekundärlastigen Aluminiumlegierung mit einem hohen Gehalt an recyceltem Sekundäraluminium hergestellt werden kann. Die Gehalte sind andererseits erfindungsgemäß so gewählt, dass trotz der erhöhten Gehalte von Eisen, Kupfer, Zink und Titan keine gröberen Phasenagglomerate entstehen können, welche die mechanischen Kennwerte negativ beeinträchtigen können. Im Hinblick auf die Korrosionsbeständigkeit ungünstige Eigenschaften, welche hauptsächlich durch das Vorhandensein von Kupfer bedingt sein können, können diese durch die angegebenen Gewichtsanteile in Grenzen gehalten werden. Um insbesondere aus der erhaltenen Aluminiumlegierung Bauteile zu fertigen, die eine hohe Duktilität und gute Korrosionseigenschaften beziehungsweise eine geringe Korrosionsanfälligkeit aufweisen, ist es von Vorteil, sowohl den Gehalt an Kupfer als auch den Gehalt an Eisen nicht zu hoch zu wählen.

Die erfindungsgemäße Legierung umfasst 0,08 bis 0,5 Gew.-% Eisen, und bevorzugt 0,08 bis 0,25 Gew.-% Eisen. Dies beruht darauf, dass in dem Bereich bis 0,25 Gew.-% Eisen die Fe-Phasen besonders vorteilhaft gestaltet sind und dadurch die Duktilität nochmals verbessert wird. Über dem Gehalt von 0,25 Gew.-% Eisen fängt die Duktilität an zu sinken.

Ferner umfasst die erfindungsgemäße Legierung 0,01 bis 0,5 Gew.-% Kupfer, insbesondere 0,01 bis 0,2 Gew.-% Kupfer. Bei reduzierten Fe-Gehalten können Cu-Gehalte über 0,2 Gew.-% zur Bildung von ungewünschten Cu-haltigen Phasen führen, wodurch sich eine Korrosionsbeständigkeit der Legierung verschlechtern kann, insbesondere nicht mehr gegeben sein kann.

Ferner umfasst die erfindungsgemäße Legierung max. 0,35 Gew.-% Zink, da es bei höheren Zink-Gehalten zur Oberflächenkorrosion und dadurch zu einer Klebstoffunterwanderung kommen kann, wodurch das Einsatzspektrum der Legierung eingeschränkt werden kann.

Insbesondere kann dadurch der CO₂-Fußabdruck in anspruchsvollen Bereichen wie dem Strukturguss, also dem Herstellen von Strukturbauteilen, wie etwa dünnwandigen Karosseriebauteilen, stark reduziert werden. Beispielsweise kann eine Kohlendioxideinsparung im Bereich von über 6 kg CO₂-Äquivalent pro Kilogramm hergestellter Aluminiumlegierung erreicht werden. Dies ist im Hinblick auf die Verringerung des CO₂-Fußabdrucks sehr vorteilhaft.

Ferner besitzt beispielsweise Eisen in Aluminiumlegierungen so gut wie keine Löslichkeit und wird daher nahezu vollständig in Form grober intermetallischer Phasen ausgeschieden. Bei einer siliziumhaltigen Aluminiumlegierung ist hierbei insbesondere die β-Al₅FeSi-Phase ungünstig, da diese nadelig beziehungsweise nadelförmig ist. Derartige, nadelförmige eisenhaltige Phasen verringern die Duktilität des aus der Aluminiumlegierung erhältlichen Bauteils. Zudem sind solche eisenhaltigen intermetallischen Phasen sehr spröde und neigen zur Akkumulation. Bei einem hohen Eisengehalt in der Aluminiumlegierung können diese nadeligen oder nadelförmigen eisenhaltigen Phasen sehr groß werden.

Insbesondere solche großen intermetallischen, eisenhaltigen Phasen wirken stark rissauslösend und führen so meist zu einem frühen Versagen des Bauteils bei mechanischer Beanspruchung. Dies ist insbesondere bedingt durch die geringe Duktilität des Bauteilwerkstoffs, welche von dem Vorhandensein der nadeligen oder nadelförmigen eisenhaltigen Phasen herrührt.

Durch den Einbau von Mangan und/oder Molybdän und/oder Chrom und/oder Vanadium wird vorliegend insbesondere die Ausbildung der von der Morphologie her ungünstigen β-Al₅FeSi-Phase verhindert und stattdessen eine eisenhaltige α-Phase gebildet. Derartige α-Phasen, welche neben dem Eisen und dem Aluminium, Mangan und/oder Molybdän und/oder Chrom und/oder Vanadium enthalten, sorgen für eine günstigere Morphologie der diese Zusatzstoffe enthaltenden Phase. Insbesondere kann die Ausbildung von großen, nadelförmigen oder nadeligen eisenhaltigen Phasen verhindert werden. Dies kann zu einer Verbesserung der mechanischen Eigenschaften des aus der erhaltenen Aluminiumlegierung zu fertigenden Bauteils führen. Insbesondere kann auf diese Weise die Duktilität des aus der erhaltenen Aluminiumlegierung gebildeten Bauteils deutlich verbessert werden.

Die erfindungsgemäße Legierung umfasst 0,08 bis 0,5 Gew.-% Chrom, bevorzugt 0,08 bis 0,36 Gew.-% Chrom, da höhere Gehalte von Chrom zur Bildung von groben Sludge-Phasen führen können, wodurch die Duktilität rapide abnehmen kann.

Ferner umfasst die erfindungsgemäße Legierung 0,001 bis 0,095 Gew.-% Molybdän, da Mo-Gehalten von mehr als 0,095 Gew.-% Mo (insbesondere in Verbindung mit hohen Cr-Gehalten) ebenfalls zur Bildung von groben Sludge-Phasen führen können, welche eine Duktilität von aus der Legierung hergestellten Teilen deutlich verschlechtern können.

Mit der vorstehend beschriebenen Legierung ist eine thermisch stabile Legierung bei herausragender Duktilität (d.h. einer vorteilhaften Verformungsfähigkeit im Crash, einer vorteilhaften Stanznietbarkeit im Karosseriebau, usw.) erreichbar, welche gleichzeitig eine gute Korrosionsbeständigkeit und Gießbarkeit aufweist.

Die Erfindung umfasst zudem Weiterbildungen, durch die sich zusätzliche Vorteile ergeben.

In einer vorteilhaften Weiterbildung der Erfindung kann vorgesehen sein, dass die Legierung zudem 0,001 bis 0,095 Gew.-% Molybdän umfasst. Molybdän kann beim Einbau in die α-AlFeSi-Phase zu einer rundlicheren Form der Phase führen, welche vorteilhaft für die Bruchdehnung beziehungsweise Duktilität ist. Bei zu wenig Molybdän tritt dieser Effekt nicht beziehungsweise nur verminderter Form auf, sodass ein Molybdänanteil von mehr als 0,001 Gew.-% vorteilhaft ist. Hingegen kann es bei einem Molybdänanteil von mehr als 0,095 Gew.-% zu gröberen Agglomerationen (sogenannten Sludge-Phasen) kommen, welche für die Duktilität schädlich sein können. Damit ist ein Molybdänanteil von weniger als 0,095 Gew.-% (einschließlich) bevorzugt.

In einer vorteilhaften Weiterbildung der Erfindung kann vorgesehen sein, dass die Legierung zudem 0,01 bis 0,2 Gew.-% Zirkonium umfasst. Durch diese Weiterbildung kann die Dehngrenze der Legierung ohne Wärmebehandlung verbessert werden. Zirkonium bildet sogenannte Trialuminide, also Al₃Zr-Phasen, welche kornfeinend wirken und zudem die Festigkeit steigern. Bei zu geringen Gehalten ist dieser Effekt nicht feststellbar, sodass eine Untergrenze von 0,01 Gew.-% bevorzugt ist. Andererseits bilden sich bei einem zu hohen Zirkoniumgehalt von mehr als 0,2 % gröbere Al₃Zr-Nadeln, der zu einem Abfall der Duktilität führen kann.

In einer vorteilhaften Weiterbildung der Erfindung kann vorgesehen sein, dass die Legierung zudem 0,001 bis 0,1 Gew.-% Vanadium umfasst. Durch diese Weiterbildung kann die Dehngrenze der Legierung ohne Wärmebehandlung verbessert werden. Ferner ermöglicht der Vanadiumgehalt eine einfache Verwendung von Sekundäraluminium. Ähnlich wie bei Mangan kann auch Vanadium β-AlFeSi durch einen Einbau in α-AlFeSi verhindern oder verringern. Bei einem geringeren Vanadiumgehalt ist der vorteilhafte Effekt des Vanadiums nicht mehr feststellbar. Wird der Vanadiumgehalt über die angegebene Grenze von 0,1 Gew.-% erhöht, können die Phasen wieder grob ausgebildet werden, wodurch sich wieder eine schlechte Duktilität ergeben kann.

In einer vorteilhaften Weiterbildung der Erfindung kann vorgesehen sein, dass die Legierung zudem 0,002 bis 0,030 Gew.-% Strontium umfasst. Durch diese Weiterbildung kann die Dehngrenze der Legierung ohne Wärmebehandlung verbessert werden. Strontium kann Siliziumphasen zu einem feinen Netzwerk veredeln. Wird der Strontiumanteil zu gering gewählt, kann die Wirkung nicht festgestellt werden. Wird der Strontiumanteil jedoch zu groß gewählt, kann es zu einer sogenannten Überveredelung kommen, die dazu führt, dass die Siliziumphasen wieder grob werden und die Duktilität wieder sinkt. Außerdem kann sich bei einem Strontiumanteil von mehr als 0,03 Gew.-% die Wasserstoffaufnahme der Schmelze erhöhen, wodurch die Gussqualität sinken kann.

In einer vorteilhaften Weiterbildung der Erfindung kann vorgesehen sein, dass der Cr-Gehalt größer als der Mn-Gehalt ist, also der Chromgehalt größer als der Mangangehalt ist. In diesem Fall können die Phasen überraschenderweise feiner ausgebildet werden. Mit anderen Worten, es kann statt der Ausbildung von Al(Fe,Mn)Si-Phasen die Ausbildung von deutlich kleineren und rundlicheren AlSiCr-Phasen erzwungen werden, wodurch sich die Duktilität vorteilhaft steigern kann.

In einer vorteilhaften Weiterbildung der Erfindung kann vorgesehen sein, dass das Verhältnis der Summe des Cr-Gehalts und des Mn-Gehalts zu dem Mg-Gehalt zwischen 3,5 und 15, insbesondere zwischen 3,5 und 12, beträgt. Mit anderen Worten, es gilt 3,5 ≤ (a+b)/c ≤ 15, insbesondere 3,5 ≤ (a+b)/c ≤ 12, wobei a den Chromgehalt in Gew.-%, b den Mangangehalt in Gew.-% und c den Magnesiumgehalt in Gew.-% angeben. Dies beruht darauf, dass Chromgehalte und Mangangehalte Magnesium teilweise in einer π-Phase abbinden können. Wird einerseits zu viel Magnesium abgebunden, kann eine erreichte Festigkeit zu gering sein. Wird andererseits zu wenig Magnesium abgebunden, kann sich durch freies Magnesium die Dehngrenze verschlechtern. Für bestmögliche Dehnungseigenschaften bei thermischer Stabilität trotz höherer Magnesiumanteile sollte daher (Cr + Mn) / Mg (d. h. das Verhältnis (a + b) / c) vorteilhafterweise zwischen 3,5 und 15 betragen, und noch bevorzugter zwischen 3,5 und 12 betragen.

In einer vorteilhaften Weiterbildung der Erfindung kann vorgesehen sein, dass nach einer Temperaturbeaufschlagung von 80 °C bis 250 °C für 10 min bis 120 min, insbesondere nach einer Temperaturbeaufschlagung von 150 °C bis 250 °C für 25 min bis 120 min, die Dehngrenze weniger als 160 MPa beträgt und eine Steigerung der Dehngrenze weniger als 30 MPa beträgt, und/oder nach einer Temperaturbeaufschlagung von 150 °C für 1000 Stunden die Dehngrenze weniger als 160 MPa beträgt und eine Steigerung der Dehngrenze weniger als 30 MPa beträgt.

Falls die Dehngrenze andererseits nach einer derartigen Temperaturbeaufschlagung über den Wert von 160 MPa ansteigt und/oder um 30 MPa oder mehr ansteigt, bedeutet dies, dass eine Ausscheidungshärtung eingesetzt hat, die auf eine thermische Instabilität hindeutet. Eine solche thermische Instabilität ist nicht bevorzugt, da die Bruchdehnung absinken kann und somit das Bauteil weniger belastbar wird beziehungsweise bei einem Kraftfahrzeug bei einem Unfall weniger Verformungsenergie aufnehmen kann. Zudem können zu geringe Werte der Bruchdehnung zu Problemen bei einer Dauerfestigkeit führen können.

Die vorstehenden definierten Werte für die Wärmebehandlungen beruhen einerseits darauf, dass es vorteilhaft ist, falls nach einem Lackiervorgang, der eine Wärmebehandlung umfasst, die Dehngrenze nicht über 160 MPa beträgt und/oder ein Anstieg der Dehngrenze nicht mehr als 30 MPa beträgt (die Dehngrenze nicht um mehr als 30 MPa ansteigt), da ein solcher Anstieg auf eine thermische Instabilität hindeutet. Beispielsweise können in einem solchen Lackiervorgang von 80 bis 250 °C für 10 bis 120 min herrschen, insbesondere 150 bis 250 °C für 25 bis 120 min.

Andererseits soll nach einer Wärmebehandlung, die einen Temperaturstress während einer Lebensdauer eine Bauteils simuliert (beispielsweise kann dies durch eine Wärmebehandlung mit einer Temperaturbeaufschlagung von 150 °C für 1000 h simuliert werden), die Dehngrenze nicht über 160 MPa betragen und/oder nicht um mehr als 30 MPa angestiegen sein (im Vergleich zu dem Gusszustand), da dies ebenfalls auf eine thermische Instabilität hindeutet.

Die 0,2-%-Dehngrenze R_{p0,2} ist hierbei diejenige (einachsige) mechanische Spannung, bei der eine auf eine Anfangslänge einer Probe bezogene bleibende Dehnung (d. h. der Index p gibt eine plastische Dehnung an) nach Entlastung 0,2 % beträgt.

Ferner ist gemäß einem Aspekt der Erfindung eine Verwendung der vorstehend beschriebenen Aluminiumlegierung zum Druckgießen von Strukturbauteilen, insbesondere im Automobilbau bereitgestellt. Mit anderen Worten, die vorstehend beschriebene Aluminiumlegierung kann dafür verwendet werden, Strukturbauteile mittels Druckguss herzustellen, die bei einer Automobilherstellung beispielsweise als Karosseriebauteile verwendet werden können.

Zudem ist gemäß einem Aspekt der Erfindung ein Strukturbauteil für ein Kraftfahrzeug bereitgestellt, dass aus der erfindungsgemäßen Aluminiumlegierung hergestellt ist.

Ein solches Strukturbauteil lässt sich für die unterschiedlichsten Einsatzzwecke bei Kraftfahrzeugen nutzen, da es sowohl die erforderliche Festigkeit als auch eine ausreichende hohe Duktilität und eine gute Entformbarkeit aufweist. Eine hohe Festigkeit ist vorteilhaft, damit das Kraftfahrzeug mit dünnwandigen Strukturbauteilen gefertigt werden kann, was wiederum das Gewicht des Kraftfahrzeugs reduzieren kann. Die ausreichend hohen Duktilität kann beispielsweise beim Stanznieten gewährleisten, dass ein Stanzniet ohne Risse und Brüche ausgebildet werden kann. Eine gute Entformbarkeit ist beispielsweise bei Fertigungsprozessen wie dem Druckgießen von Strukturbauteilen vorteilhaft.

Für dieses Strukturbauteil ist die erfindungsgemäße Aluminiumlegierung besonders gut geeignet; sie lässt sich jedoch auch für andere Bauteile einsetzen. Durch den Verzicht auf eine Wärmebehandlung des Strukturbauteils kann ein geometrisches Verziehen desselben vermieden werden, so dass eine hohe geometrische Genauigkeit beziehungsweise Formgenauigkeit des Strukturbauteils erreicht werden kann.

Ferner ist erfindungsgemäß gemäß einem weiteren Aspekt der Erfindung ein Kraftfahrzeug mit dem Strukturbauteil bereitgestellt. Zusätzlich zu den vorstehend angegebenen Vorteilen kann durch die Verwendung des Strukturbauteils auf aufwendige Wärmebehandlungen verzichtet werden, und somit können insbesondere Vorteile in Bezug auf Kosten und Herstellungszeiten erreicht werden. Zudem kann eine Maßhaltigkeit des erfindungsgemäßen Kraftfahrzeugs verbessert werden, wenn ein Verziehen durch eine Wärmebehandlung vermieden werden kann. Ferner kann durch die Verwendung von Sekundäraluminium ein CO₂-Ausstoß bei der Herstellung des erfindungsgemäßen Kraftfahrzeugs verringert werden und somit die Kosten weiter gesenkt und eine Nachhaltigkeit erhöht werden.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:

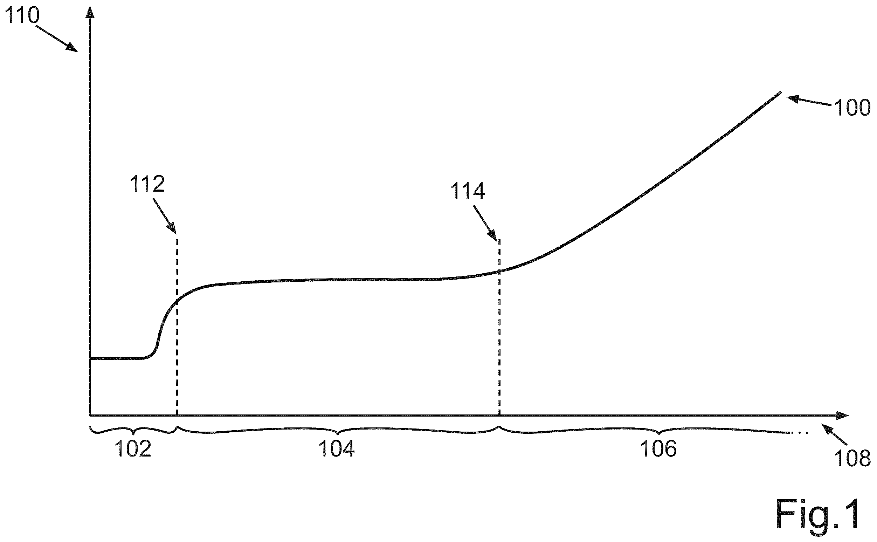

- Fig. 1: eine schematische Darstellung einer Abhängigkeit einer Dehngrenze von einem Magnesiumgehalt.

Fig. 1 zeigt eine schematische Darstellung einer Abhängigkeit einer Dehngrenze 100 einer Aluminiumlegierung von deren Magnesiumgehalt.

Auf der x-Achse 108 ist hierbei der Mg-Gehalt in Gew.-% aufgetragen, während auf der y-Achse 110 der Wert der Dehngrenze R_{p0,2} in MPa aufgetragen ist. Die 0,2-%-Dehngrenze R_{p0,2} ist hierbei diejenige (einachsige) mechanische Spannung, bei der eine auf eine Anfangslänge einer Probe bezogene bleibende Dehnung (d. h. plastische Dehnung, daher der Index ) nach Entlastung 0,2 % beträgt.

Es ist aus Fig. 1 ersichtlich, dass zwischen einer Untergrenze 112 von 0,04 Gew.-% bis zu einer Obergrenze 114 von 0,095 Gew.-% der in dieser Offenbarung gewählte Bereich 104 für den Mg-Gehalt ein Optimum darstellt. Nur zwischen der Untergrenze 112 und der Obergrenze 114 ist es möglich, sowohl von Härtungseffekten einer Mischkristallverfestigung zu profitieren, als auch einen thermisch stabilen Zustand zu erzeugen.

Während eine Festigkeit einer Aluminiumlegierung mit einem Mg-Gehalt von weniger als 0,04 Gew.-% sehr niedrig ausfällt (Bereich 102), findet bei großen Mg-Gehalten (Bereich 106) über der Obergrenze 114 ein Aushärten mit der Zeit statt und somit entsteht eine thermische Instabilität, die nicht bevorzugt ist.

Nachfolgend sind des Weiteren in Tabelle 1 Zusammensetzungen von verschiedenen Legierungen aufgeführt, deren Eigenschaften nachfolgend in Tabelle 2 aufgelistet sind.

**Tabelle 1: Zusammensetzungen von verschiedenen Aluminiumlegierungen**

| Zusammensetzung | Referenzlegierung 1 | Referenzlegierung 2 | Referenzlegierung 3 | Erfindungsgemäße Legierung A Sekundärlastig | Erfindungsgemäße Legierung B Primärlastig |
|---|---|---|---|---|---|
| Si [Gew.-%] | 9,5 | 9,0 | 9,5 | 8,5 | 8,5 |
| Mn [Gew.-%] | 0,61 | 0,61 | 0,52 | 0,02 | 0,02 |
| Cr [Gew.-%] | 0,0001 | 0,10 | 0,045 | 0,36 | 0,36 |
| Mo [Gew.-%] | 0,2 | 0,04 | 0,03 | 0,03 | 0,03 |
| Mg [Gew.-%] | 0,03 | 0,35 | 0,03 | 0,06 | 0,06 |
| Fe [Gew.-%] | 0,12 | 0,12 | 0,12 | 0,24 | 0,15 |
| Cu [Gew.-%] | 0,005 | 0,005 | 0,005 | 0,2 | 0,07 |
| Zn [Gew.-%] | 0,0001 | 0,18 | 0,0001 | 0,15 | 0,15 |
| Ti [Gew.-%] | 0,06 | 0,06 | 0,06 | 0,12 | 0,12 |
| Zr [Gew.-%] | 0,15 | 0,15 | 0,15 | 0,05 | 0,05 |
| V [Gew.-%] | 0,0001 | 0,0001 | 0,0001 | 0,0001 | 0,0001 |
| Sr [Gew.-%] | 150 ppm | 150 ppm | 150 ppm | 180 ppm | 180 ppm |

**Tabelle 2: Eigenschaften der verschiedenen Aluminiumlegierungen**

| Eigenschaft | Referenzlegierung 1 | Referenzlegierung 2 | Referenzlegierung 3 | Erfindungsgemäße Legierung A Sekundärlastig | Erfindungsgemäße Legierung B Primärlastig |
|---|---|---|---|---|---|
| R_{p0,2} (F) [MPa] | 124 | 136 | 126 | 130 | 128 |
| A (F) [%] | 10,1 | 7,2 | 11,6 | 12,6 | 13,4 |
| R_{p0,2} (T5) nach 1000 h bei 150 °C [MPa] | 126 | 185 | 127 | 135 | 132 |
| A (T5) nach 1000 h bei 150 °C [%] | 9,8 | 4,6 | 10,9 | 11,9 | 12,7 |
| Wärmestabilität | ++ | - | ++ | ++ | ++ |
| Stanznietbarkeit | ++ | - | ++ | ++ | ++ |
| Korrosionsfestigkeit | ++ | + | ++ | + | ++ |
| Recyclingrate | 23 % | 72 % | 21 % | 91 % | 80 % |
| Post-Consumer-Anteil | 9% | 12 % | 8% | 40 % | 17 % |

In der ersten Spalte der Tabelle 1 sind die verschiedenen chemischen Elemente genannt, deren Gehalte in den angegebenen Legierungen jeweils in Tabelle 1 in Gew.-% aufgeführt sind.

Die Referenzlegierung 1 wurde der Druckschrift EP 1 443 122 B1 entnommen, die Referenzlegierung 2 wurde der Druckschrift EP 3 825 428 A1 entnommen und die Referenzlegierung 3 wurde der Druckschrift EP 3 775 309 B1 entnommen. Ferner sind in der fünften und sechsten Spalte von Tabelle 1 und 2 jeweils eine erfindungsgemäße sekundärlastige Legierung A und eine erfindungsgemäße primärlastige Legierung B aufgeführt.

Mit R_{p0,2} (F) ist vorliegend die 0,2-%-Dehngrenze in MPa im Gusszustand F ohne weitere Wärmebehandlung bezeichnet und mit A (F) ist vorliegend die Bruchdehnung in % im Gusszustand F ohne weitere Wärmebehandlung bezeichnet. Zudem ist vorliegend mit R_{p0,2} (T5) die 0,2-%-Dehngrenze in MPa in einem Zustand nach einer Wärmebehandlung bei 150 °C für 1000 h bezeichnet, während A (T5) die Bruchdehnung in % nach einer Wärmebehandlung bei 150 °C für 1000 h bezeichnet.

Vorliegend ist ein hoher Wert für die 0,2-%-Dehngrenze im Gusszustand F der Aluminiumlegierung bevorzugt, da hierdurch eine geringe Wandstärke eines Bauteils ermöglicht wird, die somit ein Gewicht des Bauteils reduzieren kann.

Die Bruchdehnung bezeichnet vorliegend eine bleibende Verlängerung einer Zugprobe nach einem Bruch in einem Bruchversuch, bezogen auf die Anfangslänge der Zugprobe. Sie charakterisiert eine Verformungsfähigkeit bzw. Duktilität eines Werkstoffs. Vorliegend ist eine hohe Bruchdehnung der Aluminiumlegierung bevorzugt, da diese eine gute Stanznietbarkeit ermöglicht.

Die Angaben für Wärmestabilität, Stanznietbarkeit und Korrosionsfestigkeit beziehen sich auf Testversuche mit den Legierungen, wobei die Legierungen in Bezug auf diese Kriterien nach einem vorgegebenen Kriterienkatalog bewertet wurden. Beispielsweise wurde die Wärmestabilität dadurch getestet, dass die 0,2-%-Dehngrenze und die Bruchdehnung an vordefinierten Proben getestet wurde, jeweils einerseits ohne eine Wärmebehandlung, andererseits nach einer Wärmebehandlung bei 150 °C für eine Dauer von 1000 h. Beträgt der Anstieg von R_{p0,2} über 30 MPa ist die Wärmestabilität nicht gewährleistet.

Für die Stanznietbarkeit wurden in einem Versuchsaufbau Stanzniete (Niet mit 5,3 mm Durchmesser) in einen Probekörper eingebracht, der stempelseitig ein 2 mm dickes 6000er Blech und der Fügepartner matrizenseitig die zu untersuchende Druckgusslegierung als 3 mm starkes Blech umfasste. Nach dem Stanznieten wurde der gefertigte Stanzniet auf Risse und Auffälligkeiten untersucht, und das Ergebnis nach einem vorgegeben Kriterienkatalog bewertet.

Ferner wurde die Korrosionsfestigkeit in einer Korrosionswechselprüfung gemäß eines normierten Prüfvorgangs beurteilt. Dieser Prüfvorgang umfasst eine zyklisch wechselnde Kombination von unterschiedlichen klimatischen und/oder korrosiven Beanspruchungen. Ein Prüfzyklus besteht aus:
- 4 h Salzsprühnebelprüfung, Prüfverfahren NSS nach DIN EN ISO 9227,
- 4 h Lagerung bei Normalklima, und
- 16 h Feucht-Wärme-Lagerung, Prüfklima CH nach DIN EN ISO 6270-2.

Nach jeweils 5 Zyklen folgt eine 2-tägige Ruhephase bei Normalklima. Eine Prüfung über 15 Zyklen dauert somit insgesamt 3 Wochen. Mit dieser Prüfmethode kann das Korrosionsverhalten unter statischer Beanspruchung durch Salz, Feuchte und Temperatur bewertet werden.

Vorliegend sind eine hohe Wärmestabilität, eine gute Stanznietbarkeit und eine hohe Korrosionsfestigkeit bevorzugt, um eine breite Verwendbarkeit der Aluminiumlegierung zu gewährleisten. Eine hohe Dehngrenze, eine hohe Bruchdehnung, eine hohe Wärmestabilität, eine gute Stanznietbarkeit und eine hohe Korrosionsfestigkeit werden vorliegend auch als gute mechanische Eigenschaften bezeichnet.

Die Recyclingrate bezeichnet den Anteil von Sekundäraluminium an der gesamten Legierung in Gew.-%. Ferner bezeichnet der Post-Consumer-Anteil den Anteil von Sekundäraluminium, das nach einem Gebrauch bei einem Endverbraucher in den Recyclingkreislauf zurückgeführt wurde. Eine hohe Recyclingrate und ein hoher Post-Consumer-Anteil sind vorteilhaft, um die Nachhaltigkeit der verwendeten Aluminiumlegierung zu erhöhen.

Die Referenzlegierungen 1 und 3 weisen niedrige Magnesiumgehalte auf und sind daher naturhart. Sie besitzen gute mechanische und physikalische Eigenschaften und thermische Stabilität, lassen sich jedoch aufgrund der geringen Fe-, Cu-, Mg- und Zn-Gehalte nur begrenzt aus Recyclingmaterialien herstellen. Dies ist dem Wert für die Recyclingrate in Tabelle 2 zu entnehmen. Diese Werte wurden aus den in den Druckschriften angegebenen Gehalten an Eisen und Kupfer zurückgerechnet beziehungsweise diesen Druckschriften entnommen.

Der Einsatz von Post-Consumer-Schrotten ist aufgrund der geringen Zulässigkeitsgrenzen an Verunreinigungsmetallen bei den Referenzlegierungen 1 und 3 in nur sehr begrenztem Umfang möglich.

Die Referenzlegierung 2 erreicht sehr hohe Recyclingraten und nutzt neben Mangan zudem einen erhöhten Chromgehalt. Jedoch weist die Referenzlegierung 2 im Vergleich zu den Referenzlegierungen 1 und 3 vor allem durch den weiterhin hohen Mangangehalt von 0,61 Gew.-% und insbesondere durch den hohen Magnesiumgehalt von 0,35 Gew.-% nur sehr begrenzte mechanische und physikalische Eigenschaften auf. Dies ist aus den schlechten Bewertungen hinsichtlich der Wärmestabilität und Stanznietbarkeit gemäß Tabelle 2 entnehmbar. Zudem ist durch den erhöhten Magnesiumgehalt der Referenzlegierung 2 kein naturharter Charakter der Referenzlegierung 2 gegeben und somit ist keine thermische Stabilität vorhanden.

Die Möglichkeit, für die Herstellung der Referenzlegierung 2 Sekundäraluminium (recyceltes Material) einzusetzen, ist durch den erhöhten Magnesium- und Zinkgehalt im Vergleich zu den Referenzlegierungen 1 und 3 etwas erhöht, jedoch durch den begrenzten Eisen- und Kupfergehalt sehr eingeschränkt.

Die Legierungen A und B schaffen es als einzige Legierungen in diesem Vergleich sämtliche Vorteile miteinander zu vereinen. Durch die gewählten Bereiche der Fe-, Cu-, Mg- und Zn-Gehalte kann die erfindungsgemäße Legierung sowohl mit einem höheren Sekundäraluminiumanteil (Legierung A) als auch mit einem geringeren Sekundäraluminiumanteil (Legierung B) realisiert werden. Beide Varianten erzielen jedoch Recyclingraten (91 % und 80 %), die noch über den Recyclingraten der vorstehend genannten Referenzlegierungen 1, 2 und 3 liegen.

Durch die geschickte Auswahl der Elementgehalte, sowie ein passendes Verhältnis zueinander handelt es sich bei der erfindungsgemäßen Legierung außerdem um eine Legierung, welche einerseits thermisch stabil ist, andererseits hohe Dehnungswerte aufweist und es zudem ermöglicht, einen hohen Recyclinganteil zu erreichen.

Damit stellt die erfindungsgemäße Legierung (Legierung A und Legierung B) trotz ihres naturharten Charakters eine hervorragende Alternative zu den deutlich prozess- und kostenintensiveren geglühten Legierungen dar, ermöglicht eine gute Wärmestabilität, eine gute Stanznietbarkeit und eine gute Korrosionsfestigkeit.

Insgesamt zeigen die Beispiele, wie eine Aluminiumlegierung für Strukturgussanwendungen mit erhöhter Duktilität, eine Verwendung der Aluminiumlegierung zum Druckgießen von Strukturbauteilen, ein Strukturbauteil für ein Kraftfahrzeug aus der Aluminiumlegierung und ein Kraftfahrzeug mit dem Strukturbauteil bereitgestellt werden können.

### Bezugszeichenliste

- 100: Dehngrenze
- 102: Bereich ohne Mischkristallhärtung
- 104: Bereich der Mischkristallhärtung
- 106: Bereich mit thermischer Instabilität
- 108: x-Achse
- 110: y-Achse
- 112: Untergrenze
- 114: Obergrenze

## Patentansprüche

1. Aluminiumlegierung für Strukturgussanwendungen mit erhöhter Duktilität, umfassend
- 7,5 bis 11,5 Gew.-% Silizium,
- max. 0,24 Gew.-% Mangan,
- 0,08 bis 0,5 Gew.-% Chrom,
- 0,04 bis 0,095 Gew.-% Magnesium, insbesondere 0,06 bis 0,095 Gew.-%, Magnesium,
- 0,08 bis 0,5 Gew.-% Eisen, insbesondere 0,08 bis 0,25 Gew.-% Eisen,
- 0,01 bis 0,5 Gew.-% Kupfer, insbesondere 0,01 bis 0,2 Gew.-% Kupfer,
- max. 0,35 Gew.-% Zink und
- 0,004 bis 0,15 Gew.-% Titan,
- sowie als Rest Aluminium und unvermeidbare Verunreinigungen.

2. Aluminiumlegierung nach Anspruch 1,
**gekennzeichnet durch**
0,001 bis 0,095 Gew.-% Molybdän.

3. Aluminiumlegierung nach Anspruch 1 oder 2,
**gekennzeichnet durch**
0,01 bis 0,2 Gew.-% Zirkonium.

4. Aluminiumlegierung nach einem der vorhergehenden Ansprüche,
**gekennzeichnet durch**
0,001 bis 0,1 Gew.-% Vanadium.

5. Aluminiumlegierung nach einem der vorhergehenden Ansprüche,
**gekennzeichnet durch**
0,002 bis 0,030 Gew.-% Strontium.

6. Aluminiumlegierung nach einem der vorhergehenden Ansprüche,
**dadurch gekennzeichnet, dass**
der Chromgehalt größer als der Mangangehalt ist.

7. Aluminiumlegierung nach einem der vorhergehenden Ansprüche,
**dadurch gekennzeichnet, dass**
das Verhältnis der Summe des Chromgehalts und des Mangangehalts zu dem Magnesiumgehalt zwischen 3,5 und 15, insbesondere zwischen 3,5 und 12, beträgt.

8. Aluminiumlegierung nach einem der vorhergehenden Ansprüche,
**dadurch gekennzeichnet, dass**
- nach einer Temperaturbeaufschlagung von 80 °C bis 250 °C für 10 min bis 120 min, insbesondere von 150 °C bis 250 °C für 25 min bis 120 min, die Dehngrenze weniger als 160 MPa beträgt und eine Steigerung der Dehngrenze weniger als 30 MPa beträgt, und/oder
- nach einer Temperaturbeaufschlagung von 150 °C für 1000 Stunden die Dehngrenze weniger als 160 MPa beträgt und eine Steigerung der Dehngrenze weniger als 30 MPa beträgt.

9. Verwendung einer Aluminiumlegierung nach einem der vorhergehenden Ansprüche zum Druckgießen von Strukturbauteilen, insbesondere im Automobilbau.

10. Strukturbauteil für ein Kraftfahrzeug aus einer Aluminiumlegierung nach einem der Ansprüche 1 bis 8.

11. Kraftfahrzeug mit einem Strukturbauteil gemäß dem vorhergehenden Anspruch.
